**Europäisches Patentamt**

**European Patent Office**

**Office européen des brevets**

(19)

(11) Veröffentlichungsnummer: **0 096 156 B1**

# EUROPÄISCHE PATENTSCHRIFT

(12)

(45) Veröffentlichungstag der Patentschrift:
**07.01.88**

(21) Anmeldenummer: **83101859.3**

(22) Anmeldetag: **25.02.83**

(51) Int. Cl.⁴: **G 01 L 1/22**

(54) **Verfahren zur quasihermetischen, rückwirkungsarmen Abdeckung empfindlicher physikalischer Strukturen, insbesondere Dehnungsmessstreifen.**

(30) Priorität: **06.04.82 DE 3212738**

(43) Veröffentlichungstag der Anmeldung:
**21.12.83 Patentblatt 83/51**

(45) Bekanntmachung des Hinweises auf die Patenterteilung:
**07.01.88 Patentblatt 88/1**

(84) Benannte Vertragsstaaten:
**CH FR GB LI NL SE**

(56) Entgegenhaltungen:
**EP - A - 0 008 522**
**FR - A - 1 369 116**
**US - A - 3 060 395**
**US - A - 4 104 605**

**IEE REVIEWS, PROCEEDINGS SECTION A AI, Band 126, Nr. 11R, November 1979, Seiten 1029-1051, Hitchin, GB; J.E. ROUGHTON et al.: "Electromechanical transducers in hostile environments"**
**Philips techn. Rdsch. 39. 1980/81, Eindhoven (NL) K. Bethe und D. Schön "MeBaufnehmer mit Dünnfilm-DehnungsmeBstreifen" Seiten 117 bis 125**
**Philips techn. Rdsch 39, 1980/81, Eindhoven (NL); K. Bethe und D. Schön:"Messaufnehmer mit Dünnfilm-Dehnungsmessstreifen", Seiten 117-125**

(73) Patentinhaber: **Bran & Luebbe Industrie Automation GmbH & Co.,**
**Hans-Bunte-Strasse 8-10 Postfach 10 30 09, D-6900 Heidelberg 1 (DE)**

(72) Erfinder: **Horn, Klaus, Prof. Dr.-Ing., Sanddornweg 10a, D-3300 Braunschweig (DE)**

(74) Vertreter: **Riecke, Manfred, Neuköllner Strasse 8, D-6333 Braunfels (DE)**

## Beschreibung

Die Erfindung betrifft ein Verfahren zur quasihermetischen rückwirkungsarmen Abdeckung empfindlicher physikalischer Strukturen auf Strukturträgern zum Schutze gegen Verschmutzung, chemische Aggressionen und/oder physikalische Störeinflüsse.

Bei vielen feinwerktechnischen, mikroelektronischen, physikalischen, medizinischen, chemischen Bauteilen und Konstruktionselementen tritt in der Praxis das Problem auf, auf die Strukturträger aufgetragene funktionelle Strukturen, wie z.B. Halbleiterschaltkreise, elektrooptische Strahlungsdetektoren, Photowiderstände, IC's für kleinvolumige Anordnungen und DMS-Sensoren, hochwirksam gegen Angriffe korrosiver und strukturändernder chemischer Komponenten der Umgebung zu schützen oder gegen das Zudringen oder Austauschen gas- oder dampfförmiger sowie auch flüssiger Atmosphärenbestandteile abzuschirmen.

Die heutigen Technologien kennen viele Methoden, um bei einer grossen Zahl derartiger Problemstellungen annähernd «hermetische» Abdichtungen zu erreichen.

Stellvertretend für viele andere seien hier angeführt:

a) metallische Abdeckungen, mit einem metallischen Strukturträger metallisch verschweisst oder verlötet, in Sonderfällen auch mittels organischer oder besser noch anorganischer Bindemittel verklebt,

b) Glas- und Keramikabdeckungen,

c) galvanische Überzüge,

d) Oxidüberzüge,

e) im Vakuum z.B. durch Sputter- oder Bedampfungs-Verfahren deponierte metallische, oxidische oder keramische Überzüge,

f) Epitaxie-Schichten.

Mit starken Einschränkungen bezüglich ihrer Abdichteigenschaften können darüberhinaus noch Abdeckungen aus organischen Lacken, Folien, Anstrichen oder Formteilen Anwendung finden.

Aber selbst wenn diese hohe chemische Resistenz und exzellente Flüssigkeits- und insbesondere wasserabweisende Eigenschaften aufweisen, können sie die Strukturen langfristig nur unvollkommen gegen Gase und Dämpfe mit kleinem Molekulargewicht abdichten, weil diese organischen Abdecksubstanzen gewöhnlich vernetzte Grossmolekülstrukturen aufweisen, die für die erwähnten Gase Molekularfilter darstellen.

Typische Beispiele bieten hier die Gehäuse für integrierte Halbleiter-Schaltkreise und Bauelemente:

Die auf breiter Basis eingesetzten Kunststoffgehäuse bieten trotz Verwendung relativ starkwandiger Abdeckungen nur beschränkten Schutz gegen Wasserdampf und andere strukturschädigende Gase; Langzeitstabilität (mil-Ausführungen) gewährleisten nur Metallgehäuse und Gehäuse aus keramischen Materialien (Al$_2$O$_3$ etc.)

Stark eingeschränkt wird die Auswahl an technisch geeigneten Lösungen allerdings dann, wenn zu der Forderung möglichst hermetischer Versiegelung noch die Notwendigkeit hinzukommt, durch die Abdeckung funktionelle Eigenschaften des Strukturträgers und/oder der Strukturen selbst geringstmöglich zu beeinflussen.

So kann es notwendig sein, die Wärmekapazität, den Wärmeübergang, die Masse oder die geometrischen Abmessungen des Strukturträgers und/oder der Struktur selbst möglichst geringfügig durch das Aufbringen der Abdeckung zu verändern oder es wird gefordert, dass radioaktive, elektromagnetische (Licht-) oder akustische Strahlung möglichst ungehinderten Zugang zu der Struktur haben sollen.

Als «Strukturen» kommen hierbei vorzugsweise Sensorelemente und elektrische Netzwerke, wie Photodioden, Heiss- und Kaltleiter, Gausselemente, Spulen, Kondensatorbeläge, Folien-, Draht- und Dünnfilm-Widerstandsnetzwerke aus Metall oder Halbleitermaterialien, u.v.a.m. in Frage, an deren Langzeitstabilität und Reproduzierbarkeit hohe Anforderungen gestellt werden müssen.

Ein wichtiges Anwendungsbeispiel stellen hier Präzisionsaufnehmer für Kräfte, Drücke, Drehmomente u.a. dar, die mittels dehnungsempfindlicher Sensoren, z.B. Dehnungsmessstreifen (DMS), SAW-Generatoren, kapazitiven Aufnehmern, die Oberflächendehnungen ausgezeichneter Oberflächenzonen von Messfederkörpern als Strukturträger in elektrisch nutzbare Signale umformen, die die Messfedern unter dem Einfluss der zu messenden, oben erwähnten mechanischen Grössen erfahren.

Aufgabe der vorliegenden Erfindung ist es, ein Verfahren anzugeben, um derartige Dehnungsmessstreifen, aber auch alle sonstigen ähnlichen, an der Oberfläche aufgetragenen funktionellen Strukturen hochwirksam und ohne Beeinflussung der Funktion abzudecken.

Diese Aufgabe ist durch ein Verfahren gelöst, das die in Anspruch 1 angegebenen Merkmale aufweist.

Für Dehnungsmessstreifen zeigen in der Zeichnung:

Fig. 1a schematisch einen Dehnungsmessstreifen ohne Abdeckung auf einer Biegebalkenfeder, in Schnittdarstellung,

Fig. 1b die Feder der Fig. 1 in Ansicht,

Fig. 2 einen Dehnungsmessstreifen nach Fig. 1 innerhalb eines abdeckenden Gehäuses,

Fig. 3 einen unter Zwischenlegung einer Isolationsschicht mit einer Metallfolie abgedeckten Dehnungsmessstreifen,

Fig. 4 einen nach dem erfindungsgemässen Verfahren abgedeckten Dehnungsmessstreifen, in Schnittdarstellung,

Fig. 5 eine Ansicht des Dehnungsmessstreifens der Fig. 4 in Pfeilrichtung A

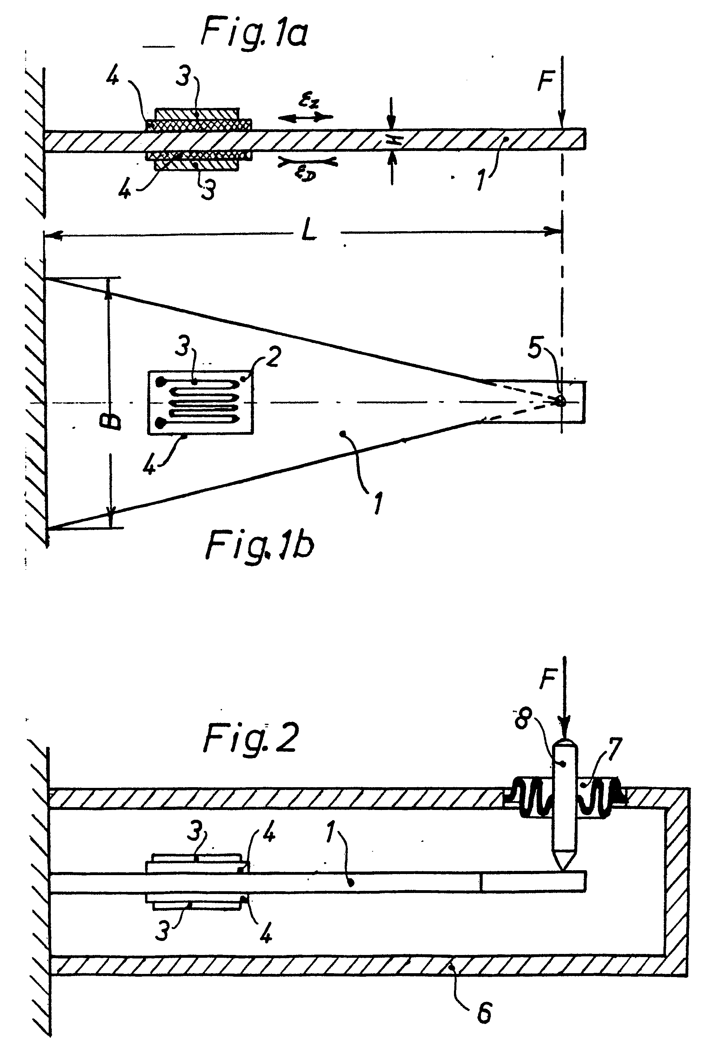

Fig. 1 zeigt einen Präzisions-Kraftaufnehmer mit einer Biegebalken-Messfeder 1 konstanter Materialhöhe H und von im wesentlichen gleichschenklig-dreieckförmiger Grundfläche mit der Länge L und der Basisbreite B. Dieser Kraftaufnehmer ist an seiner Basis starr eingespannt und wird an seinem Lastangriffspunkt 5 im Abstand L von der Basis von der zu messenden Kraft F beaufschlagt.

Ist der Biegebalken aus isotropem, hochelastischem und extrem reibungsarmen Federmaterial mit dem Elastizitätsmodul E hergestellt, wird nach den Theorien der Festigkeitslehre im dreieckförmigen Balkenbereich von der Kraft F auf der Oberfläche oder Oberseite eine Zugdehnung $\varepsilon_Z$ und auf der Unterseite eine betragsgleiche Stauchdehnung $\varepsilon_D$ erzeugt, die sich nach der Formel

$$\left|\varepsilon_{Z,D}\right| = \frac{6 \cdot L}{E \cdot B \cdot H} 2 \cdot F \qquad (I)$$

berechnen lässt.

Diese Dehnungen können nun in bekannter Weise von Dehnungsmessstreifen (DMS) 2 in relative Änderungen $\frac{\Delta R}{R}$ ihres Grundwertes R umgeformt werden,

$$\frac{\Delta R}{R} = k \cdot \varepsilon_{Z,D} \qquad (II)$$

wobei der Proportionalitätsfaktor k bei DMS mit metallischen Widerstandsgittern Werte von etwa 2 bis 3 aufweist.

bei halbleitenden Widerstandsgittern dagegen Werte von $\pm$ 50 bis $\pm$ 200 annehmen kann.

Da aus Festigkeitsgründen die Materialdehnungen $\varepsilon_{max}$ bei Höchstbelastung durch $F_{max}$ nicht nennenswert höher als

$$10^{-3} \leqslant \left|\varepsilon_{Z,D,max}\right| \leqslant 2 \cdot 10^{-3} \qquad (III)$$

gemacht werden können, sind insbesondere bei den durch hervorragende Linearitätseigenschaften ausgezeichneten DMS mit metallischen Widerstandsnetzwerken (Folien, Drähte, Dünnfilmschichten) die maximal nutzbaren Widerstandsänderungen nach (II) und (III) nur

$$2 \cdot 10^{-3} \leqslant \left|\frac{\Delta R}{R}\,max\right| \leqslant 6 \cdot 10^{-3} \qquad (IV)$$

Will man derartig kleine Widerstandsänderungen bei Präzisionsmessungen beispielsweise mit Fehlern $|f_{rel} \leqslant 10^{-4}$ v.E. bestimmen, so müssen fehlerhafte Widerstandsänderungen

$$\frac{\Delta R_{f\,max}}{R}$$

der DMS unter dem Einfluss äusserer Störeinflüsse nach (IV) sicher kleiner als

$$\left|\frac{\Delta R_{f\,max}}{R}\right| \leqslant (2 \cdot 10^{-7} \qquad (V)$$

gehalten werden können. Da man aber andererseits im Interesse möglichst grosser Ausgangsmessspannungen der üblicherweise in Wheatstone-Brückenschaltungen verdrahteten DMS und kleiner Speisespannungsleistungen höhere DMS-Grundwiderstände R mit typisch 300 bis 1000 $\Omega$ verwendet, müssen die DMS Widerstandsstrecken so gut isoliert werden, dass nach (V) die den Widerstandsstrecken sozusagen als Shunt parallel liegenden Isolationswiderstände $R_{iso}$ Werte von mehr als

$$R_{iso} \geqslant 6 \cdot 10^{10}\ \Omega \qquad (VI)$$

aufweisen müssen.

Dies ist langfristig nur möglich, wenn zuverlässig dafür gesorgt wird, dass in die Isolationsträger 4 der Widerstandsstrecken 3 der DMS der Fig. 1 und die Isolationsflächen zwischen deren Widerstandsbahnen keine Feuchtigkeit eindringen kann, die in vielfältiger Weise zu elektrolytischen Isolationsdefekten und teilweise auch galvanischen Störspannungen führen.

Um speziell diese Effekte zu verhindern, sind in der einschlägigen Technik mehrere Verfahren bekannt geworden, die DMS-Strukturen gegen den Zutritt von Feuchtigkeit abzuschirmen:

1. Einhüllen der vollständigen Messfeder in ein vakuumdichtes, vorzugsweise metallisches Gehäuse 6 nach Fig. 2. Hierbei ist stets das Problem zu lösen, dass die Messkraft F über ein flexibles, aber ebenfalls vakuumdichtes Verbindungselement 7; 8 von aussen auf die Messfeder wirken muss.

Als derartige Verbindungselemente haben sich vielfach metallische Faltenbälge oder Wellmembranen eingeführt, bei sehr grossen Messkräften auch O-Ring-Dichtungen.

Neben dem hohen Aufwand haben diese Verfahren den Nachteil, dass die Verbindungselemente Kraftnebenschlüsse für die Messkraft darstellen, die reibungsbehaftet sind und aufgrund ihrer wirksamen Fläche bei Druckdifferenzen zwischen Gehäuseinnendruck und Umgebungsatmosphäre (Temperatur- und Luftdruckschwankungen) fehlerhafte Zusatzkräfte generieren.

Diese Fehlereinflüsse werden relativ umso gravierender, je kleiner die Höchstkraft $F_{max}$ ist, für die der Kraftaufnehmer zu dimensionieren ist. Sie können bis heute z.B. bei Höchstkräften $F_{max} \leqslant 10\,N$ im Rahmen von Fehlergrenzen $f_{rel} \leqslant 2 \cdot 10^{-4}$ noch nicht beherrscht werden.

2. Abdecken der DMS und der ihnen benachbarten Oberflächenzonen der Messfeder mit wasserabweisenden Überzügen z.B. aus Wachs, Bitumen, Kautschuk, Silikongummi u.ä. Hier wird von der einschlägigen DMS-Industrie ein breites Spektrum organischer Abdeckmittel angeboten.

Diese bieten zwar Schutz der DMS vor Nässe, Staub, mechanischen Beschädigungen und einer Vielzahl chemisch aggressiver Atmosphärenbestandteile, und sie beeinflussen infolge ihres sehr kleinen E-Moduls als vernachlässigbare Kraftnebenschlüsse auch die Messeigenschaften der Messfeder nur in unbedeutendem Masse.

Da sie aber als organische, grossmolekulare Verbindungen für Wasserdampf durchlässige Molekularfilter sind, bieten sie gegen langzeitiges Eindringen von Feuchtigkeit keinen wirksamen Schutz.

Wie langwierige, sehr intensive und ausgedehnte Untersuchungen u.a. an der physikalisch technischen Bundesanstalt in Braunschweig (PTB) nachgewiesen haben, ist bis zum heutigen Tag mit keinem dieser Abdeckmittel die Langzeitdrift unter Werte von $4 \times 10^{-4}$ zu senken.

3. Abdeckung mit dünnen metallischen Folien.

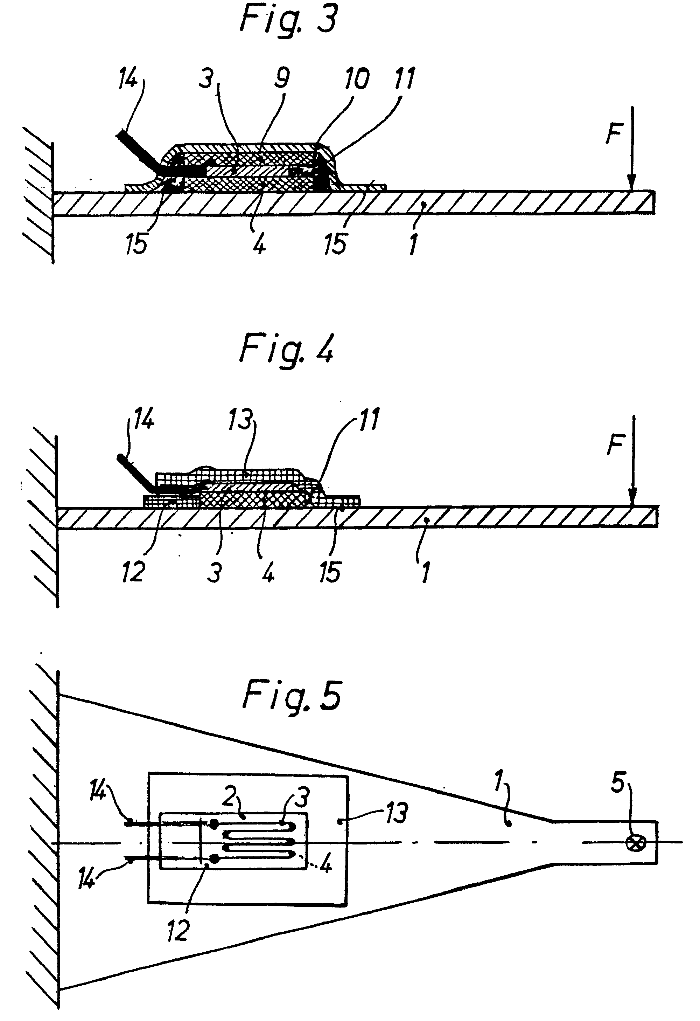

Deutlich bessere Abdichtergebnisse als nach Verfahren 2 lassen sich erzielen, wenn man die DMS entsprechend Fig. 3 nach zusätzlicher Abdeckung ihres Widerstandsgitters durch eine Isolationsschicht 9 mit einer metallischen Folie 10 extrem kleiner Dicke abdeckt und diese Folie möglichst weit über die Trägerfolien 4 der DMS 2 mittels eines Klebemittels in möglichst dünner Schicht mit der Messfederoberfläche verklebt.

Dieses Verfahren bietet, sofern nur die Klebespalte 15 zwischen Metallfolie und Messfederoberfläche effektiv extrem dünn und lang ausgedehnt sind, einen hochwirksamen Feuchteschutz, der nach den Untersuchungen der PTB deutliche Verbesserungen in der Langzeitstabilität gegenüber dem unter 2. beschriebenen Verfahren zeigt.

Insbesondere bei Messfedern für kleine Höchstkräfte $F_{max}$ stellt die metallische Abdeckung einen beachtlichen Kraftnebenschluss dar, denn bei dem heutigen Stand der Walztechnologie lassen sich Metalle mit guten Federeigenschaften nur auf minimale Stärken von ca 6 µm herunter walzen, wenn sichergestellt bleiben soll, dass die Metallfolien keine Löcher aufweisen und vakuumdicht sind.

Durch die zusätzliche Isolationsschicht 9 wird aber gleichzeitig der Abstand der Deckfolie von der Messoberfläche vergrössert, ihr Kraftschluss damit aber gleichzeitig verschlechtert, da er über mehrere Schichten von unterschiedlichen Isoliermaterialien mit schlechtem mechanischen Elastizitätsverhalten erfolgt.

Derartig abgedeckte Messfedern zeigen daher in der Praxis durchweg relativ grosse Kriech- und Hysteresefehler, die die Messgenauigkeit der Kraftaufnehmer mehr oder weniger stark einschränken.

4. Anorganische Abdeckungen bei Dünnfilm DMS.

Verwendet man statt der üblichen DMS mit Widerstandsgittern in Folien- oder Drahtform auf Kunststoffträgern 4 sogenannte Dünnfilm-Widerstandsgitter 3, die im Vakuum nach verschiedenen Verfahren (Sputtern, Bedampfen etc.) in Schichtdicken von einigen Nanometern bis zu etwa 1 µm über ebenfalls im Vakuum aufgebrachte anorganische Isolationsschichten 4 in extrem engen Kontakt mit der Messfederoberfläche gebracht werden, ist es beim Stand der heutigen Technologie möglich, derartige DMS-Strukturen abschliessend noch im Vakuum mit extrem dünnen anorganischen (oxidischen, keramischen) Deckschichten zu überziehen, die vollständigen hermetischen Schutz bieten.

(Vgl. Bethe, K. und Schön, D.: «Messaufnehmer mit Dünnfilm-DMS». Philips techn. Rdsch. 39, 1980/81, Nr. 4, S. 117–125).

Derartige Verfahren haben in der Praxis schon sehr langzeitstabile Kraftaufnehmer, insbesondere für kleine Höchstkräfte, aber auch Druck-, Drehmoment- und Beschleunigungsaufnehmer ermöglicht. Trotz Verwendung hochwertiger Federmaterialien stellt aber bei diesen Aufnehmern ein mehr oder weniger starker Materialkriecheffekt eine Grenze für die erzielbare Genauigkeit dar.

Ein weiterer wesentlicher Nachteil dieser Verfahren ist in ihrer Anwendungsbegrenzung auf Messfedern mit relativ kleinen geometrischen Abmessungen zu sehen, sollen diese in den Vakuumöfen mit wirtschaftlich vertretbarem Aufwand gefertigt werden. Aus dem gleichen Grund ist auch die Gestaltungsfreiheit in der konstruktiven Formgebung der Messnehmer sehr stark eingeschränkt.

Die vorstehend am Beispiel von Kraftaufnehmern mit DMS dargestellten Nachteile der bekannten Verfahren zur Herstellung quasi-hermetischer Abdeckungen lassen sich dadurch vermeiden, dass man die zu schützenden Strukturen und ihre Umgebung statt mit relativ dicken Metallfolien oder gar mit als Molekularfilter wirkenden organischen, auftragbaren Abdeckmitteln mit extrem dünnen, möglichst monokristallinen anorganischen Folien bedeckt, die möglichst gute elektrische Isolationseigenschaften aufweisen.

Mit guter Aussicht auf Erfolg könnten hier dünne Schichten aus feinst ausgezogenem Glas Verwendung finden. Denn dieses Material hat auch noch bei Wandstärken im Bereich von etwa 1 µm die Fähigkeit hermetischer Abdichtung und zeigt in diesen Abmessungen auch schon hinreichende mechanische Flexibilität, um sich der abzudeckenden Strukturen, Unebenheiten oder Krümmungen feinfühlig anzupassen. Die Herstellung solcher kleiner Wandstärken ist aber aufwendig. Erfindungsgemäss bietet aber monokristalliner Glimmer die bei weitem besten Voraussetzungen, das neuartige Abdeckverfahren zu realisieren.

Glimmer lässt sich mit bekannten Verfahren längs seiner Kristallebenen verhältnismässig einfach auf Schichtdicken unter 1 µm spalten, es ist klar, durchsichtig, besitzt extrem gute elektrische Isolationseigenschaften und ist resistent gegen die meisten in der Atmosphäre vorkommenden chemisch aggressiven Medien. Dank seines kristallinen Aufbaues ist es selbst in Schichtdicken im Bereich weniger Nanometer absolut vakuumdicht und erfüllt insofern alle an hermetische Abdeckungen zu stellenden Voraussetzungen. Ein weiterer Vorteil dieses Materials ist in seinen ausgezeichneten Elastizitäts- und Federeigenschaften in Schichtrichtung zu sehen, die extrem kleine Krümmungs- und Biegeradien und damit Anpassungsfähigkeit an Strukturunebenheiten gestatten.

Fig. 4 zeigt am Ausführungsbeispiel eines Biegebalken-Kraftaufnehmers die Vorteile des neuartigen Abdeckverfahrens.

Ein DMS 2 üblicher Bauart (Draht, Folie, Halbleiter) wird als zu schützende Struktur nach bekannten Verfahren auf die Oberfläche der Aufnehmermessfeder aufgebracht.

Dieser DMS ist auf seiner Oberseite ohne jede sonst übliche elektrisch isolierende, mechanisch schützende Abdeckung 9 (Fig. 3) gefertigt und weist als Isolationsträgermaterial 4 eine dünne Glimmerfolie auf.

Letzteres wirkt sich einmal vorteilhaft in Bezug auf eine Reduktion des DMS-Kriechens aus, da Schichtdicken unter 1 μm verwendbar werden, zum anderen in einer starken Erhöhung des Isolationswiderstandes und vor allem der elektrischen Durchschlagsfestigkeit, was insbesondere für die Fertigung eigensicherer und/oder explosionsgeschützter Aufnehmer von grosser Bedeutung sein kann.

Vorteilhaft wird aber in jedem Falle die Verwendung einer Elektrodenzuführungsträgerfolie 12 aus Glimmer sein, die auch beim Einsatz von DMS mit Kunststoffträgern 4 angewendet werden kann.

Die solchermassen mit der Messfederoberfläche verbundene DMS-Widerstandsgitteranordnung wird dann als Ganzes möglichst weit über die Grenzen des DMS hinausgehend und direkt die benachbarte Messfederoberfläche bedeckend mit einer extrem dünnen Glimmerfolien-Abdeckung 13 abgedeckt.

Zu diesem Zweck werden die Struktur und die benachbarten Oberflächenzonen mit einem geeigneten dünnflüssigen Bindemittel versehen und dann die Abdeckfolie über eine elastische Zwischenlage mit einem Anpressstempel mit hoher spezifischer Anpresskraft auf die zu bedeckende Fläche aufgesetzt.

Dadurch wird erreicht, dass sich die Abdeckfolie dank ihrer hohen Flexibilität extrem eng an alle Unebenheiten, Absätze und Übergänge der Struktur und Messfederoberfläche anschmiegt und so nur verschwindend enge, aber langstreckige Dichtspalte 15 zwischen Messfederoberfläche und Abdeckfolie mit hervorragenden Dichteigenschaften ermöglicht.

Wegen der Durchsichtigkeit der Glimmerabdeckung kann visuell leicht kontrolliert werden, ob das Bindemittel blasenfrei alle Restzwischenräume 11 zwischen der Struktur und der Abdeckfolie ausfüllt, was deshalb von Vorteil ist, weil bei Blasenfreiheit gewährleistet ist, dass der Aufnehmer auch im Vakuum oder bei erhöhtem Umgebungsdruck (Luftfracht etc.) ohne Gefahr der Beschädigung für die dünne Abdeckung gehandhabt werden kann.

Wegen der extrem dünnen und langstreckigen Dichtspalte 15 kann im allgemeinen ohne Schaden auf organische Bindemittel (z. B. selbstaushärtende Mehrkomponenten-Kleber) für die Fixierung der Abdeckung zurückgegriffen werden.

Bei erhöhten Anforderungen an die Abdichtung sollte aber auf anorganische, vakuumdichte Bindemittel zurückgegriffen werden, wie sie z. B. aus der Vakuumtechnik bekannt sind. Im Bedarfsfall ist dazu die Messfederoberfläche im Bereich der Bedeckungszonen in geeigneter Weise zu passivieren (z. B. Oxidieren etc.)

Ferner kann die in beschriebener Weise fixierte Abdeckung nach einem geeigneten Verfahren durch Abtragen weiterer Kristallschichten noch weiter reduziert werden, so dass im endgültigen Zustand die Schichtdicke der Abdeckung nur noch einige Nanometer beträgt.

Hierdurch werden in vollem Umfange die Vorteile von dem vorstehend unter 4. beschriebenen Verfahren und deren extrem geringe Rückwirkung auf die ursprünglichen physikalischen Eigenschaften der nicht abgedeckten Anordnung erreicht, ohne deren erwähnten konstruktiven Beschränkungen und komplizierten sowie aufwendigen Fertigungsmethoden in Kauf nehmen zu müssen.

Vor allem bietet das erfindungsgemässe Verfahren den messtechnisch entscheidenden Vorteil gegenüber dem unter 4. beschriebenen Verfahren, das nur Materialkriechen kennt, die Messaufnehmer so dimensionieren zu können, dass sich das im Vorzeichen unterscheidende Kriechen der DMS und des Messfedermaterials gerade kompensieren, wodurch sich beträchtliche Steigerungen der Messgenauigkeit erreichen lassen.

### Patentansprüche

1. Verfahren zur quasihermetischen, rückwirkungsarmen Abdeckung empfindlicher physikalischer Strukturen (3), wie beispielsweise Halbleiterschaltkreise, elektrooptische Strahlungsdetektoren, Photowiderstände, integrierte Schaltungen für kleinvolumige Anordnungen und Dehnungsmessstreifen-Sensoren (3), auf den Oberflächen von Strukturträgern (4) und Trägern (1) zum Schutze gegen Verschmutzung, chemische Aggressionen und/oder physikalische Störeinflüsse, insbesondere gegen die Einwirkung von Feuchte und strukturverändernden Gasen, dadurch gekennzeichnet, dass als Abdeckmaterial Folien (13) von einer Dicke kleiner als ein Mikrometer aus vakuumdichtem, anorganischem Material verwendet werden, die durch mechanisches Verpressen oder durch Verkleben mit einem geeigneten Kleber derart in eine innige Verbindung sowohl mit den zu schützenden Strukturen (3) als auch in grossflächigen Oberflächenzonen mit den Trägern (1) in der unmittelbaren Umgebung der Strukturen (3) gebracht werden, dass auch die Seitenflächen, an denen Folien (13) und Träger (1) übereinander liegen vakuumdicht abgeschlossen sind.

2. Verfahren nach Anspruch 1, dadurch gekennzeichnet, dass die Folien (13) eine monokristalline Struktur besitzen.

3. Verfahren nach den Ansprüchen 1 und 2, dadurch gekennzeichnet, dass als Folien (13) extrem dünn gespaltene, monokristalline Glimmerfolien verwendet werden.

4. Verfahren nach den Ansprüchen 1 und 2, dadurch gekennzeichnet, dass als Folien (13) extrem dünn ausgezogene Glasfilme verwendet werden.

5. Verfahren nach Anspruch 4, dadurch gekennzeichnet, dass der Glasfilm durch ein Ätzverfahren in seiner Dicke noch weiter geschwächt wird.

6. Verfahren nach den Ansprüchen 1–5, dadurch gekennzeichnet, dass als Bindemittel zwischen der Folie (13) und der Struktur (3) sowie dem Trägermaterial (4, 1) vakuumdichte anorganische Materialien verwendet werden.

7. Verfahren nach den Ansprüchen 1–5, dadurch gekennzeichnet, dass als Bindemittel zwischen der Folie (13) und der Struktur (3) sowie dem Trägermaterial (4, 1) selbstaushärtende Klebermaterialien hoher elektrischer Isolationsfähigkeit verwendet werden.

8. Verfahren nach Anspruch 7, dadurch gekennzeichnet, dass als Klebermaterial ein Mehrkomponenten-Kleber verwendet wird.

9. Verfahren nach den Ansprüchen 1–7 zur Abdeckung von Strukturen (3) in Form von Dehnungsmessstreifen mit Widerstandsgittern aus Draht, Metallfolie oder Halbleitermaterial, dadurch gekennzeichnet, dass als Strukturträger (4) eine Glimmerfolie verwendet wird.

10. Verfahren nach den Ansprüchen 1–9, dadurch gekennzeichnet, dass beim Aufbringen der Folie (13) durch hohe spezifische Anpressdrücke ein besonders enges, inniges Anschmiegen der Folie (13) an die Grobgestalt der Struktur (3) und des Strukturträgers (4) bewirkt wird.

11. Verfahren nach einem der Ansprüche 1–10, dadurch gekennzeichnet, dass zur Erzielung langer Dichtstrecken Elektrodenzuleitungen (14) durch gesonderte Glimmerfolienträgerelemente (12) gegen den Träger (1) isoliert sind.

12. Verfahren nach einem der Ansprüche 1–11, dadurch gekennzeichnet, dass nach der Fixierung der Folie (13) auf der zu schützenden Struktur (3) die Folie durch geeignete Verfahren noch weiter abgetragen wird.

13. Verfahren nach Anspruch 12 bei Verwendung von Glimmer als Folie (13), dadurch gekennzeichnet, dass das Abtragen durch Abspalten weiterer Kristallschichten erfolgt, so dass Restdicken der Folie (13) von nur einigen Nanometern als effektive Abdeckung verbleiben.

## Claims

1. Method for the quasi-hermetic, low reaction covering of sensitive physical structures (3), such as for example semiconductor switching circuits, electro-optical radiation detectors, photosensitive resistors, integrated circuits for arrangements of small volume and strain gauges (3), on the surfaces of structure carriers (4) and carriers (1) for protection against pollutions, chemical aggressions and/or physical disturbing influences, in particular against the influence of moisture and structure-changing gases, characterised thereby, that films (13) are employed as covering material, which have a thickness of less than one micrometre, are of vacuum-tight anorganic material and which are brought through mechanical pressing or through gluing with a suitable adhesive substance into an intimate connection with the structures (3) to be protected as well as also in surface zones of large area with the carriers (1) in the immediate neighbourhood of the structures (3) in such a manner that also the side surfaces at the films (13) and the carrier (1) lie one above the other and are closed off in vacuum-tight manner.

2. Method according to claim 1, characterised thereby, that the films (13) have a monocrystalline structure.

3. Method according to the claims 1 and 2, characterised thereby, that extremely thinly cleaved, monocrystalline mica foils are employed as films (13).

4. Method according to the claims 1 and 2, characterised thereby, that extremely thinly drawn glass films are employed as films (13).

5. Method according to claim 4, characterised thereby, that the glass film is still further weakened in its thickness by an etching process.

6. Method according to the claims 1 to 5, characterised thereby, that vacuum-tight anorganic materials are employed as binding means between the film (13) and the structure (3) as well as the carrier material (4; 1).

7. Method according to the claims 1 to 5, characterised thereby, that self-curing adhesive materials of high electrical insulation capability are employed as binding means between the film (13) and the structure (3) as well as the carrier material (4; 1).

8. Method according to claim 7, characterised thereby, that a multi-component adhesive substance is employed as adhesive material.

9. Method according to the claims 1 to 7, for the covering of structures (3) in the form of strain gauges with resistance grids of wire, metal film or semiconductor material, characterised thereby, that a mica foil is employed as structure carrier (4).

10. Method according to the claims 1 to 9, characterised thereby, that a particularly close, intimate nestling of the film (13) against the coarse shape of the structure (3) and of the structure carrier (4) is effected through high specific contact pressures during the application of the film (13).

11. Method according to one of the claims 1 to 10, characterised thereby, that for the attainment of long sealing paths, electrode feed lines (14) are insulated against the carrier (1) by separate mica foil carrier elements (12).

12. Method according to one of the claims 1 to 11, characterised thereby, that the film is worn away still further by suitable methods after the fixing of the film (13) on the structure (3) to be protected.

13. Method according to claim 12, with the employment of mica as film (13), characterised thereby, that the wearing-away takes place through the cleaving-off of further crystal layers so that residual thicknesses of the film (13) of only a few nanometres remain as effective covering.

## Revendications

1. Procédé pour le recouvrement quasi hermétique et à faible réaction de structures physiques délicates (3) comme par exemple des circuits de commutation à semi-conducteurs, des détecteurs de rayonnement électro-optiques, des photo-résistances, des circuits intégrés pour des dispositifs à faible volume et des jauges d'extensométrie (3), portées par les faces supérieures de supports de structures (4) et de supports (1), pour les protéger contre l'encrassement, les agressions chimiques et/ou les influences physiques perturbatrices, en particulier l'influence de l'humidité et de gaz modificateurs de ces structures, caractérisé en ce que l'on utilise comme matériel de recouvrement des feuillards (13) d'une épaisseur inférieure à un micromètre et un matériau minéral, feuillards qui sont amenés à former une liaison intime aussi bien avec les structures à protéger (3) qu'avec de larges zones superficielles des supports (1) situées dans l'environnement immédiat des structures (3), au moyen d'un pressage mécanique ou d'encollage avec une colle appropriée, liaison telle que les zones latérales où les feuillards (13) et les supports (1) se superposent soient également hermétiquement étanches au vide.

2. Procédé conforme à la revendication 1, caractérisé en ce que les feuillards (13) possèdent une structure monocristalline.

3. Procédé conforme aux revendications 1 et 2, caractérisé en ce que l'on utilise comme feuillards (13) des feuillards de mica monocristallins clivés extrêmement minces.

4. Procédé conforme aux revendications 1 et 2, caractérisé en ce que l'on utilise comme feuillards (13) des films de verre étirés extrêmement minces.

5. Procédé conforme à la revendication 4, caractérisé en ce que le film de verre est encore aminci davantage par un procédé d'attaque chimique.

6. Procédé conforme aux revendications 1 à 5, caractérisé en ce que l'on utilise comme produit de liaison entre le feuillard (13) et la structure (3) ainsi que le matériau support (4; 1) des matières minérales étanches au vide.

7. Procédé conforme aux revendications 1 à 5, caractérisé en ce que l'on utilise comme produit de liaison entre le feuillard (13) et la structure (3) ainsi que le matériau support (4; 1) des colles auto-durcissantes ayant des qualités d'isolation électrique élevées.

8. Procédé conforme à la revendication 7, caractérisé en ce que l'on utilise comme produit de collage une colle à plusieurs composants.

9. Procédé conforme aux revendications 1 à 7, pour le recouvrement de structures (3) sous forme de jauges d'extensométrie avec des réseaux résistants en fil; feuillard métallique ou semiconducteur, caractérisé en ce que l'on utilise comme support de structure (4) un feuillard de mica.

10. Procédé conforme aux revendications 1 à 9, caractérisé en ce que l'on produit une conformation particulièrement étroite et intime du feuillard (13) avec la forme générale de la structure (3) et du support de structure (4) en utilisant des pressions spécifiques élevées lors de la mise en place du feuillard (13).

11. Procédé conforme à l'une des revendications 1 à 10, caractérisé en ce que les électrodes d'alimentation (14) sont isolées par rapport au support (1) au moyen d'éléments de feuille de mica (12) séparés en vue d'obtenir de grandes distances d'étanchéité.

12. Procédé conforme à l'une des revendications 1 à 11, caractérisé en ce qu'après la fixation du feuillard (13) sur la structure (3) à protéger, le feuillard est encore aminci davantage par des procédés appropriés.

13. Procédé conforme à la revendication 12, caractérisé en ce que, lors de l'utilisation de mica pour le feuillard (13), l'amincissement est effectué par le clivage de couches cristallines supplémentaires de sorte qu'il ne reste plus au feuillard (13) comme recouvrement effectif qu'une épaisseur résiduelle de quelques nanomètres.

## Fig.1a

## Fig.1b

## Fig.2

# Fig. 3

# Fig. 4

# Fig. 5

11